# EUROPEAN PATENT SPECIFICATION

(11) **EP 0 869 885 B1**
(45) Date of publication and mention of the grant of the patent: **06.09.2000**
(21) Application number: 96941223.8
(22) Date of filing: 04.12.1996
(51) Int. Cl.: B60R 25/10, G08G 1/127, G01S 5/14, G01S 5/00

(54) **SYSTEM FOR GUARDING A VEHICLE FROM A DISTANCE**
SYSTEM ZUR FERNÜBERWACHUNG VON EINEM FAHRZEUG
SYSTEME DE TELESURVEILLANCE D'UN VEHICULE

(30) Priority: 04.12.1995 NL 1001808; 04.07.1996 NL 1003511
(43) Date of publication of application: 14.10.1998
(73) Proprietor: Standaert, Rudiger, 5467 DN Veghel (NL)
(72) Inventor: Standaert, Rudiger, 5467 DN Veghel (NL)
(74) Representative: Bartelds, Erik
(86) International application number: NL9600477
(87) International publication number: WO9720714

(56) References cited:
- EP-A- 0 242 099
- WO-A-93/16452
- WO-A-95/13944
- GB-A- 2 285 704
- US-A- 5 223 844

## Description

The present invention relates to a system for guarding vehicles from a distance comprising:
an alarm system, a transmitter connected controllably thereto, a receiver and a navigation system connected in signal-generating manner to the transmitter in each vehicle to be guarded, and
a central receiving station having means for at least in case of an alarm requesting a position determined by the navigation system of each of the vehicles. Such a system is known from US-A-5,223,844.

It is still a large scale occurrence at the present time that vehicles are stolen or broken into and the contents stolen. This is particularly the consequence of a declining social control in society as a whole and of a shortage of surveillant personnel, in particular police, determined by budgetary constraints. Breaking into and stealing from vehicles or even outright theft thereof therefore represents a considerable loss for the insurance companies. Much research is therefore being done into possibilities of preventing such occurrences. Vehicles in the higher price range are for instance equipped virtually standard with at least electronic start blocking systems which can operate for instance with a code key or a pin code to be entered by the user. In addition, alarm systems are increasingly being installed in vehicles whereby an alarm signal is generated when an attempt is made to break into the vehicle.

A drawback of the known systems is that, as a result of the above cited reduction in social control, a criminal will generally not be disturbed in his activities by the general public, even when an alarm signal sounds. In addition, most alarm systems and start blocking systems are relatively simple to disable for a practised criminal, whereafter the vehicle is further unprotected and can therefore easily be stolen or its contents removed. Furthermore, a vehicle which is stolen at the moment the alarm system is disabled is not immediately recognizable as a stolen vehicle.

In the above mentioned prior art document US-A-5,223,844 a system is therefor proposed with which vehicles may be guarded from a distance, so that in case the vehicle is broken into the proper authorities can be alerted very quickly, while if stolen the vehicle can be identified as a stolen vehicle and is moreover easy to trace. This system consists of an alarm system installed in the vehicle, which is connected to a transmitter/receiver in the form of a GSM telephone which is also arranged in the vehicle. The system further comprises a vehicle navigation system, for instance based on GPS. The system further comprises a central incident room. When the alarm system in one of the guarded vehicles is activated as a result of break-in in a vehicle or attempted theft of a vehicle, a signal is directly sent by the GSM telephone to the incident room, whereby action can be undertaken immediately. Besides the alarm signal also the position of the vehicle as determined by the GPS receiver is sent to the incident room. There is thus the chance that the criminal or at least the vehicle can still be found.

The invention now has for its object to adapt this known system with simple means in such a way that its capabilities are greatly enhanced. According to the invention, this is achieved in that the position requesting means is periodically operative. By regularly transmitting the position of all vehicles to the incident room not only in case of an emergency, but also during normal use, the security system may also function as a logistic monitoring system.

Preferred embodiments of the security system according to the invention form the subject-matter of the dependent claims 2-6.

The invention also relates to an assembly of an alarm system, a transmitter, a receiver and a navigation system in a vehicle as intended for use in a security system as described above. The invention also relates to a vehicle equipped with such an assembly. Finally, the invention further relates to a central receiving station for use in a security system of the above described type.

The invention will now be elucidated on the basis of an embodiment wherein reference is made to the annexed drawing, in which:

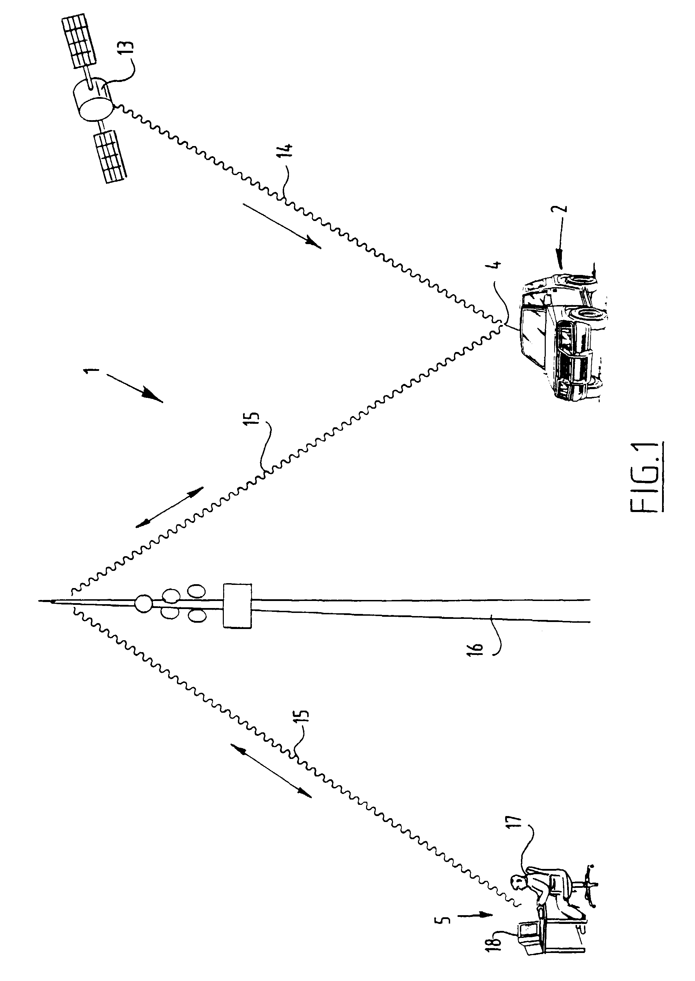

fig. 1 shows a schematic overview of the constituent parts of a security system according to the invention, and

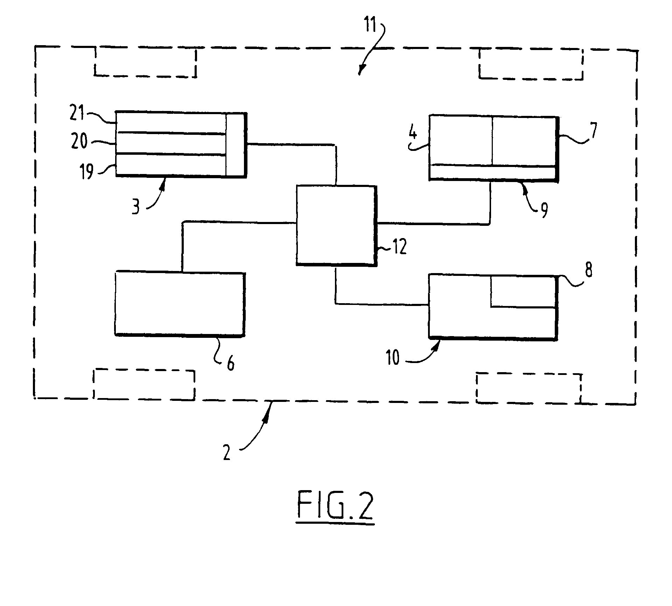

fig. 2 shows a schematic block diagram of an assembly of components arranged in a vehicle which form part of the security system according to the invention.

A system 1 for guarding a plurality of vehicles 2 from a distance is based on the presence of a central receiving station or incident room 5 from where the different vehicles 2 are guarded. For this purpose each vehicle 2 is provided with at least an alarm system 3 and a transmitter 4 connected controllably thereto. Each vehicle is further provided with a navigation system 6, for instance a GPS receiver, connected in signal-generating manner to transmitter 4. In addition to a transmitter 4, each vehicle will also have available a receiver 7 which is at least connected to the alarm system 3. Transmitter 4 and receiver 7 can herein be integrated into a mobile telephone 9. The various components are mutually connected via a central interface 12.

The security system now operates as follows. When a vehicle 2 is parked it will be locked and the alarm system 3 will be activated. This alarm system 3 comprises for instance a start interrupter 19, a glass breakage detector 20 and an ultrasonic sensor 21 arranged in the interior of the vehicle. Other modules may also be present aimed at guarding other parts of the vehicle. As soon as an attempt is made to break into the vehicle or to steal the vehicle the alarm system 3 will generate an alarm signal which is sent by transmitter 4. This signal 15 sent by transmitter 4 is passed via optional relay stations 16 to the central receiving station 5.

Simultaneously with the alarm signal the position of the vehicle 2 is also transmitted to central receiving station 5. This position is determined by the vehicle navigation system, wherein in the shown embodiment a GPS system is provided as vehicle navigation system. Use is herein made of signals 14 which are transmitted by a plurality of satellites 13 and which define the position of the vehicle 2 with an accuracy of several tens of metres. This accuracy is more than sufficient for this purpose. In central receiving station 5 an operator 17 can visualize the alarm signal on his computer screen 18 and can herein also show on the map the position of the vehicle 2 transmitting the alarm signal. Present for this purpose in central receiving station 5 is a computer (not shown) in which the requisite map data is stored in digitized form and which further includes software for processing and displaying the incoming alarm signals. In addition, the stolen vehicle 2 can be followed constantly in this manner so that the police for instance can also be guided to the vehicle.

From the central receiving station 5 it is possible to communicate with vehicle 2 via the mobile telephone 9. In the case of theft of vehicle 2, when the criminal has succeeded in disabling the alarm system 3 of the vehicle, this latter can be partially switched on again from a distance, for instance by a command from the central incident room 5. A signal source in the vehicle itself can also be activated from the central incident room 5, such as for instance a third brake light in which the word "STOLEN" or the like is illuminated. In addition, it is also possible to install a mini-camera in vehicle 2, the images from which are likewise transmitted through the mobile telephone 9 to a central incident room 5. In this manner the identity of the criminal can be determined in simple manner.

The security system 1 can be further combined with a coding and decoding installation 8 present in the vehicle. In this manner the data exchange between vehicle 2 and central incident room 5 can take place in coded manner whereby third parties cannot decipher this data. The coding and decoding means 8 can for instance form part of a modem 10 which is connected to telephone 9. Using this modem 10 the usual office appliances such as fax and PC can in addition be made suitable for use in vehicle 2.

It is also possible for the computer in central incident room 5 to "query" the vehicles 2 with some regularity concerning their position. In this manner a fleet of vehicles 2 can be guarded, which may for instance be important for courier services, security firms, companies with travelling service personnel and the like. This querying of the vehicle navigation system 6 by the computer of central receiving station 5 can, as stated, take place periodically under the control of the computer in central receiving station 5 but can also be carried out manually. The positions of all queried vehicles 2 can herein be displayed on the screen of the operator 17. In the same way data from the central incident room 5 can be transmitted to the vehicle navigation system 6. The vehicle navigation system 6 can thus be supplied with route data whereby the security system can therefore also function as route planning and control system.

The above described security system makes it possible in simple manner to guard and to follow a large number of vehicles from a central location, both in the case of theft thereof and during normal use.

## Claims

1. Security system (1) for guarding vehicles (2) from a distance comprising:
an alarm system (3), a transmitter (4) connected controllably thereto, a receiver (7) and a navigation system (6) connected in signal-generating manner to the transmitter (4) in each vehicle (2) to be guarded, and
a central receiving station (5) having means for at least in case of an alarm requesting a position determined by the navigation system (6) of each of the vehicles (2), **characterized in that** said position requesting means is periodically operative.

2. Security system (1) as claimed in claim 1, **characterized in that** said position requesting means is further manually operable.

3. Security system (1) as claimed in claim 1 or 2, **characterized in that** the central receiving station (5) is arranged for transmitting route data to the navigation system (6) of each of the vehicles.

4. Security system (1) as claimed in any one of the preceding claims, **characterized by** coding and decoding means (8) co-acting with the transmitter (4) and the receiver (7).

5. Security system (1) as claimed in claim 4, **characterized in that** the transmitter (4) and the receiver (7) are integrated into a mobile telephone (9) and the coding and decoding means (8) are incorporated in a modem (10) connected to the mobile telephone (9).

6. Security system (1) as claimed in any one of the preceding claims, **characterized in that** the alarm system (3) is controllable from a distance and the central receiving station (5) comprises means for generating and transmitting to the receiver (7) a control signal for the alarm system (3).

7. Assembly (11) of an alarm system (3), a transmitter (4), a receiver (7) and a navigation system (6) in a vehicle (2) evidently intended for use in a security system (1) as claimed in any of the foregoing claims.

8. Assembly (11) as claimed in claim 7, **characterized in that** the alarm system (3), the transmitter (4), the receiver (7) and the vehicle navigation system (6) are mutually connected with interposing of a central interface (12).

9. Assembly (11) as claimed in claim 8, **characterized by** a modem (10) connected to the central interface (12).

10. Vehicle (2) provided with an assembly (11) as claimed in any of the claims 7-9.

11. Central receiving station (5) evidently intended for use in a security system (1) as claimed in any of the claims 1-6.

## Patentansprüche

1. Sicherheitssystem (1) zum Fernüberwachen von Fahrzeugen (2), mit:
- einem Alarmsystem (3), einem damit steuer- bzw. kontrollierbar verbundenen Sender (4), einem Empfänger (7) und einem Navigationssystem (6), das in Signal erzeugender Weise mit dem in jedem zu überwachenden Fahrzeug (2) befindlichen Sender (4) verbunden ist und
- einer zentralen Empfangsstation (5), die Einrichtungen aufweist, um zumindest im Fall eines Alarms eine durch das Navigationssystem (6) bestimmte Position jedes der Fahrzeuge (2) anzufordern, dadurch gekennzeichnet, daß die Positionsabfrageeinrichtung periodisch operativ ist.

2. Sicherheitssystem (1) nach Anspruch 1, dadurch gekennzeichnet, daß die Positionsabfrageeinrichtung des weiteren manuell betreibbar ist.

3. Sicherheitssystem (1) nach Anspruch 1 oder 2, dadurch gekennzeichnet, daß die zentrale Empfangsstation (5) derart angeordnet ist, daß sie Wegdaten an das Navigationssystem (6) jedes Fahrzeugs überträgt.

4. Sicherheitssystem (1) nach einem der vorstehenden Ansprüche, gekennzeichnet durch Kodier- und Dekodiereinrichtungen (8), die mit dem Sender (4) und dem Empfänger (7) zusammenwirken.

5. Sicherheitssystem (1) nach Anspruch 4, dadurch gekennzeichnet, daß der Sender (4) und der Empfänger (7) in ein Mobiltelefon (9) integriert sind und die Kodier- und Dekodiereinrichtungen (8) in ein mit dem Mobiltelefon (9) verbundenes Modem (10) eingearbeitet bzw. eingebracht sind.

6. Sicherheitssystem (1) nach einem der vorstehenden Ansprüche, dadurch gekennzeichnet, daß das Alarmsystem (3) aus einer Entfernung kontrollier- bzw. steuerbar ist und daß die zentrale Empfangsstation (5) Mittel umfaßt zur Erzeugung und zum Senden eines Steuer-bzw. Kontrollsignals für das Alarmsystem (3) zu dem Empfänger (7).

7. Anordnung (11) aus einem Alarmsystem (3), einem Sender (4), einem Empfänger (7) und einem Navigationssystem (6) in einem Fahrzeug (2), vorgesehen zur Verwendung in einem Sicherheitssystem (1) nach einem der vorstehenden Ansprüche.

8. Anordnung (11) nach Anspruch 7, dadurch gekennzeichnet, daß das Alarmsystem (3), der Sender (4), der Empfänger (7) und das Navigationssystem (6) des Fahrzeugs miteinander verbunden sind unter Zwischenschaltung eines zentralen Interfaces (12).

9. Anordnung (11) nach Anspruch 8, gekennzeichnet durch ein Modem (10), das mit dem zentralen Interface (12) verbunden ist.

10. Fahrzeug (2), das mit einer Anordnung (11) nach einem der Ansprüche 7 bis 9 versehen ist.

11. Zentrale Empfangsstation (5), vorgesehen zur Verwendung in einem Sicherheitssystem (1) nach einem der Ansprüche 1 bis 6.

## Revendications

1. Système de sécurité (1) pour la télésurveillance de véhicules (2), comprenant :
un système d'alarme (3), un émetteur (4) connecté d'une manière commandable à ce système, un récepteur (7) et un système de navigation (6) connecté, d'une manière produisant des signaux, à l'émetteur (4) dans chaque véhicule (2) devant être surveillé, et
un poste central de réception (5) comportant des moyens pour, au moins dans le cas d'une alarme, demander une position déterminée par le système de navigation (6) de chacun des véhicules (2),
caractérisé en ce que lesdits moyens de demande de position sont actifs périodiquement.

2. Système de sécurité (1) selon la revendication 1, caractérisé en ce que lesdits moyens de demande de position peuvent en outre être actionnés manuellement.

3. Système de sécurité (1) selon la revendication 1 ou 2, caractérisé en ce que le poste central de réception (5) est agencé de manière à transmettre des données d'acheminement au système de navigation (6) de chacun des véhicules.

4. Système de sécurité (1) selon l'une quelconque des revendications précédentes, caractérisé par des moyens de codage et de décodage (8) coopérant avec l'émetteur (4) du récepteur (7).

5. Système de sécurité (1) selon la revendication 4, caractérisé en ce que l'émetteur (4) et le récepteur (7) sont intégrés dans un téléphone mobile (9) et que les moyens de codage et de décodage (8) sont incorporés dans un modem (10) connecté au téléphone mobile (9).

6. Système de sécurité (1) selon l'une quelconque des revendications précédentes, caractérisé en ce que le système d'alarme (3) est télécommandable et que le poste central de réception (5) comprend des moyens pour produire et envoyer au récepteur (7) un signal de commande pour le système d'alarme (3).

7. Ensemble (11) comprenant un système d'alarme (3), un émetteur (4), un récepteur (7) et un système de navigation (6) dans un véhicule (2) destiné à l'évidence à être utilisé dans un système de sécurité (1) selon l'une quelconque des revendications précédentes.

8. Ensemble (11) selon la revendication 7, caractérisé en ce que le système d'alarme (3), l'émetteur (4), le récepteur (7) et le système (6) de navigation du véhicule sont connectés mutuellement avec interposition d'une interface centrale (12).

9. Ensemble (11) selon la revendication 8, caractérisé par un modem (10) connecté à l'interface centrale (12).

10. Véhicule (2) pourvu d'un ensemble (11) selon l'une quelconque des revendications 7-9.

11. Poste central de réception (5) destiné manifestement à être utilisé dans un système de sécurité (1) selon l'une quelconque des revendications 1-6.
